Europäisches Patentamt

European Patent Office

Office européen des brevets

(19)

(11) Numéro de publication: **0 256 902 B1**

(12) **FASCICULE DE BREVET EUROPEEN**

(45) Date de publication de fascicule du brevet:
16.10.91

(51) Int. Cl.⁵: **G01T 1/40**

(21) Numéro de dépôt: 87401606.6

(22) Date de dépôt: **08.07.87**

(54) **Dispositif de comptage de particules d'un rayonnement ionisant.**

(30) Priorité: **10.07.86 FR 8610088**

(43) Date de publication de la demande:
**24.02.88 Bulletin 88/08**

(45) Mention de la délivrance du brevet:
**16.10.91 Bulletin 91/42**

(84) Etats contractants désignés:
**BE CH DE ES FR GB IT LI NL SE**

(56) Documents cités:
**EP-A- 0 189 645**
**US-A- 4 339 663**

**HEALTH PHYSICS, VOL. 36,no. 1, janvier 1979, pages 59,60 Pergamon Press Ltd, Oxford, GB; J. FELDSTEIN et al.: Total stabilization of an alpha spectro-metry system**

**IEEE TRANSACTIONS ON NUCLEAR SCIENCE, vol. NS-27, no. 1 ,fevrier 1980,pages 757-762,IEEE, NEW YORK, US; G.F. HUNT et al.: A microprocessor-controlled portable neutron spectrometer**

(73) Titulaire: **ELECTRICITE DE FRANCE Service National**
**2, rue Louis Murat**
**F-75008 Paris(FR)**

(72) Inventeur: **Dubail, Alain**
**12 bis, rue Henriette**
**F-92140 Clamart(FR)**
Inventeur: **Pailhes, Alain**
**13, la Charlotte**
**F-13560 Lamanon Senas(FR)**
Inventeur: **Schulcz, Francis**
**12, mas de Conse Aureille**
**F-13430 Eyguieres(FR)**

(74) Mandataire: **Martin, Jean-Jacques et al**
**Cabinet REGIMBEAU 26, Avenue Kléber**
**F-75116 Paris(FR)**

**Description**

La présente invention est relative à un dispositif de comptage de particules d'un rayonnement ionisant et son utilisation pour la mise en oeuvre d'un procédé de mesure de fuite entre les circuits primaire et secondaire d'un générateur de vapeur.

Des dispositifs de comptage de particules d'un rayonnement ionisant, comme celui décrit dans IEEE Transactions on Nuclear Science, Vol. NS-27, n° 1, 1980, pages 757-762, permettent d'effectuer un comptage direct des particules ionisantes, ce comptage étant le plus souvent réalisé dans le seul cas du comptage d'un type bien déterminé de particule ionisante, c'est-à-dire du niveau d'énergie correspondant de ces particules. Cependant, dans le cas de particules émises à niveau d'énergie élevé telles que des photons $\gamma$ d'énergie supérieure à 4,5 MeV, la détection et en particulier la mesure de débit correspondante de l'effluent radioactif support, en particulier dans le cas des faibles ou très faibles débits, soit pour une intensité d'émission faible de l'effluent radioactif, est le plus souvent rendue précaire en raison de la présence de dérives de détection en fonction de conditions d'utilisation et notamment de la température. Ces dérives parasites ont pour effet, compte tenu de la grande sensibilité nécessaire pour des mesures à faible intensité d'émission, de rendre les résultats de mesure erronés et par conséquent inutilisables pour la mise en évidence et la mesure de faibles débits de fuites d'effluents radioactifs.

Le document Health Physics, Vol. 36, n° 1, 1979, pages 53-60 divulgue un dispositif de comptage de particules d'un rayonnement ionisant de niveau d'énergie déterminée, comprenant des moyens de détection dudit rayonnement délivrant un signal de détection sous forme d'impulsions, dispositif comportant, en amont des moyens de détection, une source de référence délivrant un rayonnement ionisant de référence dont le spectre d'énergie est situé à l'extérieur du spectre d'énergie dudit rayonnement ionisant, ledit dispositif comportant en aval des moyens de détection des moyens de discrimination en amplitude dudit signal de détection selon une échelle de niveau d'amplitude et en spectre d'énergie du rayonnement ionisant reçu, ayant engendré lesdites impulsions, par comptage du nombre d'impulsions d'amplitude donnée, par rapport aux niveaux de l'échelle d'amplitude, engendrées pendant un intervalle de temps de mesure.

Un autre objet de la présente invention est également l'utilisation d'un dispositif de comptage de particules d'un rayonnement ionisant pour la mise en oeuvre d'un procédé de détection et de mesure de débit de fuite entre les circuits primaire et secondaire d'un générateur de vapeur, dont un exemple est donné dans le brevet britannique GB-A-912 209.

Le dispositif de comptage de particules d'un rayonnement ionisant de niveau d'énergie déterminé comprenant des moyens de détection délivrant un signal de détection sous forme d'impulsions, objet de l'invention, est remarquable en ce qu'il comporte des moyens de réglage de la position relative des niveaux d'amplitude de l'échelle d'amplitude et de l'amplitude des impulsions engendrées par le rayonnement ionisant de référence, discriminé en fonction du nombre d'impulsions de même amplitude déterminée comptées pendant le temps de mesure, et en ce que lesdits moyens de discrimination en amplitude comportent des moyens d'échantillonnage des impulsions du signal de détection constitués par un convertisseur analogique numérique piloté par un microprocesseur muni de ses périphériques et délivrant pour chaque impulsion amplifiée un signal numérique représentatif de l'amplitude de celle-ci, et des moyens de comparaison dudit signal numérique auxdits niveaux de l'échelle d'amplitude et de comptage des impulsions d'amplitude déterminée, associés aux niveaux de l'échelle d'amplitude, lesdits moyens de comparaison et de comptage étant constitués par ledit microprocesseur et ses périphériques comportant des zones mémoires de la mémoire adressable associée au microprocesseur, un niveau de l'échelle d'amplitude correspondant à une zone mémoire déterminée, et en ce que lesdits moyens de réglage de la position relative des niveaux d'amplitude de l'échelle d'amplitude et de l'amplitude des impulsions engendrées par le rayonnement ionisant de référence sont constitués par des moyens amplificateurs à gain ajustable insérés entre les moyens de détection et les moyens de discrimination en amplitude et en spectre d'énergie du rayonnement ionisant et constitués par un amplificateur intermédiaire à gain ajustable commandé par le microprocesseur par l'intermédiaire d'un convertisseur numérique analogique, lesdits moyens de réglage de la position relative des niveaux d'amplitude et de l'amplitude des impulsions engendrées par le rayonnement ionisant de référence comportant des moyens de décalage de l'adresse des zones mémoires vives.

L'invention trouve application, en raison du haut degré de précision de calibrage du dispositif précédemment décrit, au comptage de particules de rayonnement ionisant en milieu industriel dans lequel les conditions de fonctionnement sont particulièrement rudes.

En particulier, le dispositif de comptage de particules de rayonnement ionisant objet de l'invention peut avantageusement être utilisé pour la mise en oeuvre d'un procédé de détection et de mesure de débit de fuite entre les circuits primaire et secondaire d'un générateur de vapeur d'une centrale nucléaire par détection de l'isotope 16 de l'azote, $N^{16}$.

L'invention sera mieux comprise et d'autres caractéristiques apparaîtront à la lecture de la description et à l'observation des dessins ci-après dans lesquels :

- la figure 1a représente un schéma synoptique d'un dispositif de comptage de particules de rayonnement ionisant . :forme à la présente invention,
- la figure 1b représente un diagramme représentatif des spectres relatifs de la source de référence délivrant le rayonnement ionisant de référence et du rayonnement ionisant à détecter ou mesurer,
- la figure 2 représente les moyens essentiels de discrimination et de comptage conformément au dispositif de l'invention représenté en figure 1a,
- la figure 3 représente la variation du niveau d'énergie des particules de rayonnement ionisant de référence en fonction de la température,
- la figure 4 représente un organigramme de programme de type "menu" illustrant le fonctionnement général du dispositif de l'invention et permettant d'effectuer une initialisation convenable du matériel,
- la figure 5 représente l'organigramme d'initialisation de l'asservissement dans le cas où les moyens de réglage sont constitués par un amplificateur à gain ajustable,
- la figure 6 représente un organigramme de recherche du maximum,dit relatif,du nombre d'impulsions de niveau déterminé par niveau d'amplitude de l'échelle d'amplitude ou canaux,
- les figures 7a et 7b complémentaires, représentent un organigramme de transmission des informations ou paramètres d'état de fonctionnement du dispositif aux périphériques d'entrée-sortie.

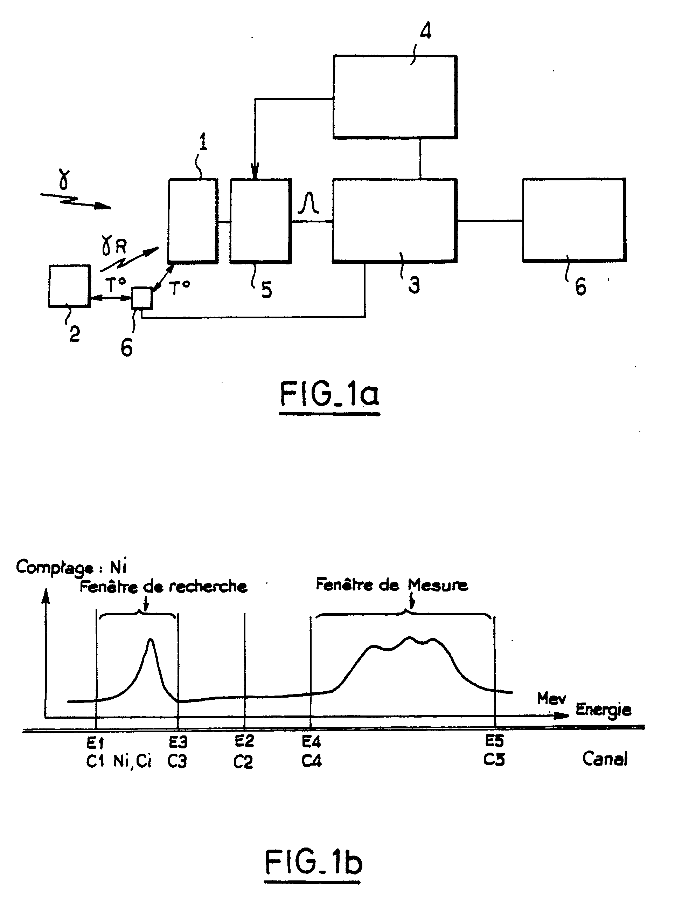

Le dispositif de comptage de particules d'un rayonnement ionisant, objet de l'invention, sera tout d'abord décrit en liaison avec la figure 1a représentative d'un schéma synoptique du dispositif de l'invention.

Conformément à cette figure, le dispositif de comptage de particules d'un rayonnement ionisant de niveau d'énergie déterminé, comprend des moyens de détection 1 du rayonnement. Ces moyens de détection 1 délivrent un signal de détection sous forme d'impulsions engendrées par l'impact des particules de rayonnement ionisant.

Conformément à l'invention, le dispositif comporte en outre en amont des moyens de détection 1, une source,notée 2, de référence délivrant un rayonnement ionisant de référence, dont le spectre d'énergie est situé à l'extérieur du spectre d'énergie du rayonnement ionisant dont on veut effectuer le comptage ainsi que représenté en figure 1b.

Le dispositif de comptage de particules, objet de l'invention, comporte d'autre part, en aval des moyens de détection 1, des moyens 3 de discrimination en amplitude du signal de détection selon une échelle de niveaux d'amplitude, notés Ci sur la figure 1b,et en spectre d'énergie du rayonnement ionisant reçu. Sur la figure 1b, les niveaux d'amplitude, ou canaux,sont notés Ci et le spectre d'énergie du rayonnement ionisant reçu est constitué par une représentation en ordonnée du nombre Ni d'impulsions d'amplitude donnée par rapport aux niveaux, notés Ci, de l'échelle d'amplitude et engendrées pendant un intervalle de temps de mesure. En fait, l'amplitude des impulsions du signal de détection est proportionnelle à l'énergie de chaque particule du rayonnement ionisant reçu. Par rayonnement ionisant reçu, on entend, soit le rayonnement ionisant de référence délivré par la source de référence 2, soit le rayonnement ionisant à détecter ou la combinaison des deux. Bien entendu, la discrimination en amplitude du signal de détection et en spectre d'énergie du rayonnement ionisant reçu par comptage du nombre d'impulsions d'amplitude donnée est effectuée pendant un intervalle de temps de mesure déterminé.

En outre, conformément à la figure 1a, le dispositif de comptage objet de l'invention, comporte des moyens 4 de réglage de la position relative des niveaux d'amplitude Ci de l'échelle d'amplitude et de l'amplitude des impulsions engendrées par le rayonnement ionisant de référence, ce rayonnement de référence étant, conformément à l'invention, discriminé à partir du nombre Ni d'impulsions de même amplitude déterminée comptées pendant le temps de mesure.

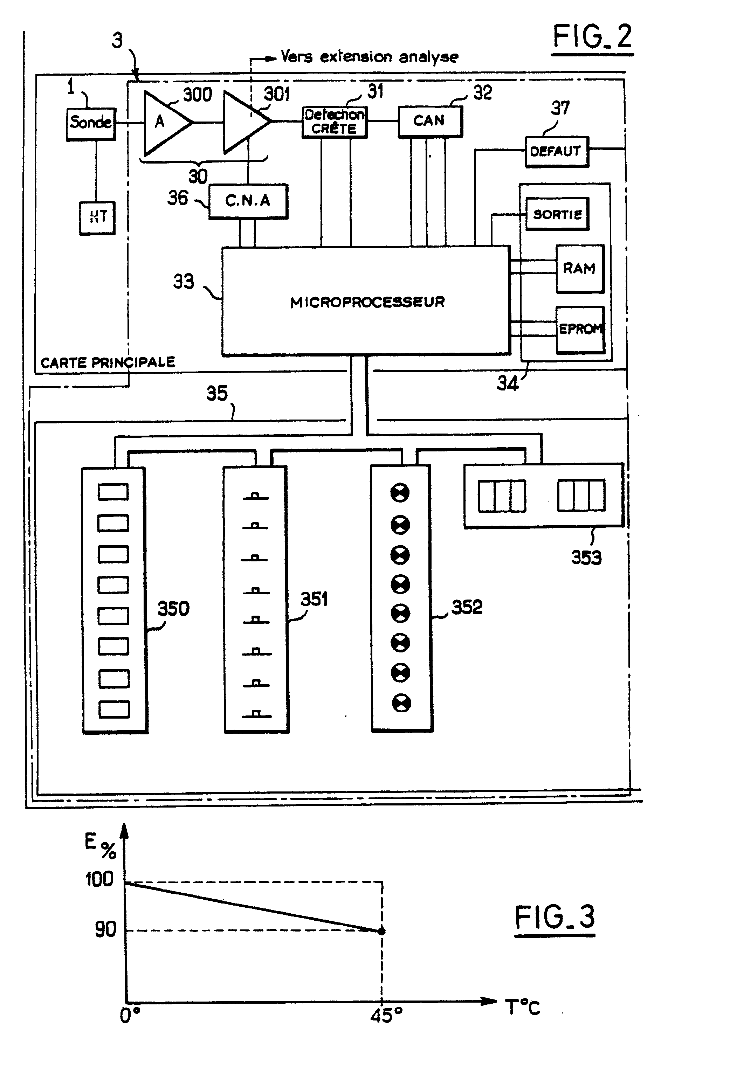

Le dispositif de l'invention représenté en figure 1a sera maintenant décrit en liaison avec la figure 2.

Conformément à cette figure, les moyens 3 de discrimination en amplitude du signal de détection et en spectre d'énergie du rayonnement ionisant reçu par comptage du nombre d'impulsions d'amplitude donnée comportent des moyens 30 d'amplification des impulsions délivrées par les moyens de détection 1 et des moyens 31 de détection de l'amplitude crête des impulsions amplifiées délivrées par les moyens d'amplification 30. Les moyens 30 d'amplification des impulsions délivrées par les moyens de détection 1 peuvent avantageusement être constitués par des amplificateurs à haute impédance d'entrée permettant de transformer le courant représentatif du signal de détection délivré par les moyens de détection 1 en une tension représentative du signal de détection. Les moyens 31 de détection de l'amplitude crête peuvent être constitués par tout moyen de détection d'amplitude crête classique dans lesquels la charge d'un réseau capacitif à la valeur crête de l'impulsion est réalisée. Ces dispositifs classiques ne seront pas décrits en détail. En outre, les moyens 3 de discrimination et de détection en spectre d'énergie comportent des moyens d'échantillonnage, notés 32, 33, des impulsions du signal de détection. Les moyens d'échantillonnage précités délivrent pour chaque impulsion amplifiée un signal numérique représentatif de l'amplitude de celle-ci.

Des moyens notés sur la figure 2, 33, 34, 35, permettent d'effectuer la comparaison du signal numérique précité au niveau de l'échelle d'amplitude et de comptage des impulsions d'amplitude, ces moyens étant associés au niveau de l'échelle d'amplitude. Les moyens de comptage précités sont incrémentés, pendant le temps de mesure, sur comparaison positive entre la valeur correspondante du signal numérique et le niveau correspondant de l'échelle d'amplitude.

Ainsi qu'il apparaît, en outre, en figure 2, les moyens d'échantillonnage 32, 33 sont constitués par un convertisseur-analogique-numérique 32, piloté par un microprocesseur 33 muni de ses périphériques 34. Les périphériques 34 comportent une mémoire vive, notée RAM, et, à titre d'exemple non limitatif, une mémoire morte du type mémoire morte programmable électriquement, notée EPROM. Les moyens de comparaison et de comptage 33, 34, 35 sont également constitués par le microprocesseur 33 et ses périphériques 34, auxquels sont associés des périphériques d'entrée-sortie notés 35, permettant le codage des niveaux d'échelle d'amplitude Ci tels que représentés sur la figure 1b, ainsi que notamment l'affichage de paramètres calculés ou mesurés de l'état du dispositif.

A titre d'exemple non limitatif, les périphériques d'entrée-sortie 35 peuvent comporter des moyens de codage 350, constitués par exemple par des roues codeuses, des moyens de codage 351 constitués par des interrupteurs à bouton-poussoir, et des voyants d'affichage lumineux notés 352. En outre, un système d'affichage alphanumérique peut également être prévu, ce système est noté 353. Les périphériques d'entrée-sortie 350, 351, 352, 353 sont reliés au microprocesseur 33 par l'intermédiaire d'un BUS de liaison.

De manière avantageuse, les paramètres de définition des niveaux d'énergie des particules du rayonnement ionisant de référence et des particules du rayonnement ionisant dont on veut effectuer le comptage, peuvent être introduits au moyen des roues codeuses 350, celles-ci permettant par exemple l'introduction des valeurs telles que E1 et E2... représentées sur la figure 1b, ces valeurs définissant la fenêtre de recherche ou plage d'énergie dans laquelle le rayonnement ionisant de référence ou particules de celui-ci doivent être recherchées. En outre, des valeurs telles que E4 et E5, correspondant respectivement à l'énergie minimale et à l'énergie maximale des particules du rayonnement ionisant dont on veut effectuer le comptage, peuvent être introduites, ces valeurs définissant, en fait, la fenêtre de mesure proprement dite. Bien entendu, et de façon non limitative, d'autres valeurs d'énergie peuvent être introduites, telles que par exemple la valeur E2 représentée sur la figure 1b, relative à l'énergie nominale du rayonnement ionisant de référence.

Le fonctionnement du dispositif de comptage de particules d'un rayonnement ionisant, objet de l'invention, tel que représenté en figures 1a et 2 compte tenu de l'introduction des paramètres relatifs à la fenêtre de recherche et à la fenêtre de mesure telles que représentée en figure 1b, est alors le suivant. Les moyens de détection 1 transforment les photons ou particules du rayonnement ionisant en impulsions de charge et les moyens d'amplification 30 transforment les impulsions de charge en impulsions de tension constituant le signal de détection. Les moyens de détection d'amplitude crête 31 des impulsions constituant le signal de détection, envoient une demande d'interruption au microprocesseur 33 pour chaque impulsion du signal de détection dépassant un seuil déterminé, la valeur crête de l'impulsion de détection étant alors mémorisée. Les moyens d'échantillonnage constitués par le microprocesseur 33 et le convertisseur analogique-numérique 32 permettent alors d'effectuer une conversion de la valeur crête mémorisée précédemment citée, en un nombre binaire compris, à titre d'exemple non limitatif, entre 0 et 255. Une stabilisation du spectre d'énergie du rayonnement ionisant reçu par rapport au rayonnement ionisant de référence émis par la source de référence 2 est en outre effectuée par un recalage de la position relative des niveaux d'amplitude Ci de l'échelle d'amplitude et de l'amplitude des impulsions engendrées par le rayonnement ionisant de référence. Le rayonnement de référence est, conformément à l'invention, discriminé à partir du nombre Ni d'impulsions de même amplitude déterminée correspondant à l'énergie de la fenêtre de recherche, telle que définie précédemment. Le comptage des impulsions est alors effectué pendant un temps de mesure déterminé.

Un recalage convenable de l'échelle d'amplitude par rapport à l'énergie des impulsions de la source de référence étant ainsi effectué, les impulsions détectées puis mémorisées par le système d'échantillonnage peuvent alors être transmises pour traitement de l'information pour chaque photon $\gamma$ situé dans la fenêtre de mesure, dont l'énergie correspond à l'énergie du rayonnement ionisant dont on veut effectuer le comptage.

Les moyens de comptage sont constitués par des zones mémoire de la mémoire vive adressable,notée RAM,34 sur la figure 2, mémoire associée au microprocesseur 33. Un niveau de l'échelle d'amplitude correspond à une zone mémoire déterminée.

Dans le but de réaliser la discrimination en spectre d'énergie du rayonnement ionisant reçu et, en définitive, afin d'effectuer la discrimination du rayonnement ionisant issu de la source de référence, les moyens de discrimination en spectre d'énergie du rayonnement ionisant reçu peuvent comprendre, de façon non limitative, des moyens de lecture du moyen de comptage,dans un intervalle de temps de mesure, du nombre d'impulsions d'amplitude sensiblement égal aux différents niveaux de l'échelle d'amplitude. Des moyens de repérage du maximum relatif, noté Nim, du nombre Ni d'impulsions d'amplitude correspondant à chaque niveau Ci de l'échelle d'amplitude, peuvent en outre être prévus. Le maximum Nim du nombre d'impulsions Ni correspond aux impulsions engendrées par le rayonnement ionisant de référence 2. Les moyens de lecture précités et les moyens de repérage du maximum relatif Nim peuvent,avantageusement,être constitués par des programmes de calcul qui seront décrits ultérieurement dans la description.

Selon la figure 2 précitée, les moyens de réglage de la position relative des niveaux d'amplitude ou canaux Ci de l'échelle d'amplitude et de l'amplitude des impulsions du signal de détection engendrées par et représentatives du rayonnement ionisant de référence, comprennent des moyens amplificateurs à gain ajustable. Sur la figure 2, les moyens précités,désignés par 5 sur la figure 1a, sont insérés entre les moyens de détection 1 et les moyens 3 de discrimination en amplitude et en spectre d'énergie du rayonnement ionisant reçus, les moyens amplificateurs à gain ajustable 5 étant, ainsi que représentés sur la figure 2 précitée, constitués par un amplificateur intermédiaire à gain ajustable 301, directement intégré aux moyens amplificateurs 30 des impulsions délivrées par les moyens de détection 1 précédemment décrits. L'amplificateur intermédiaire à gain ajustable 301 est commandé par le microprocesseur 33 par l'intermédiaire d'un convertisseur numérique analogique,noté 36, permettant la commande directe de l'amplificateur intermédiaire 301 pour le réglage ou correction du gain de celui-ci.

En outre, la source de référence 2 peut avantageusement être constituée par une source contenant l'isotope 241 de l'américium. L'utilisation d'une telle source n'est pas limitative, toute source de référence compatible du point de vue des spectres d'énergie relatifs du rayonnement de la source de référence et du rayonnement dont on veut effectuer le comptage pouvant normalement être utilisée. En particulier, une source contenant l'isotope 241 de l'américium a pour propriété de délivrer essentiellement un rayonnement de particules $\gamma$, particules dont les caractéristiques sont a priori sensiblement différentes des particules $\gamma$ pouvant être détectées, mais pour lesquelles une énergie équivalente en particules $\gamma$ de l'ordre de 2500 KeV peut être définie avec précision.

Dans le cas de la détection de particules de rayonnement ionisant $\gamma$, les moyens de détection 1 peuvent comporter avantageusement un scintillateur permettant d'engendrer un changement de fréquence du rayonnement reçu,et,bien entendu,du rayonnement de référence, suivi d'un photomultiplicateur sensible au signal obtenu par changement de fréquence du rayonnement $\gamma$. Un préamplificateur est normalement prévu afin de déliver le signal de détection.

Conformément à une caractéristique avantageuse du dispositif de comptage, objet de l'invention, une sonde de température,notée 6 sur la figure 1a, peut être prévue afin de permettre d'engendrer un signal représentatif de la température du scintillateur et de la source de référence, afin d'assurer une compensation du rendement de détection du rayonnement issu de la source de référence en fonction de la température. Sur la figure 3, on a représenté la variation relative du niveau d'énergie des particules de rayonnement ionisant émises par la source de référence précitée, en fonction de la température. Sur cette figure, on constate une diminution de 10 % du niveau d'énergie et en définitive du niveau d'amplitude des impulsions du signal de détection pour une variation de température comprise entre 0 et 45° C.

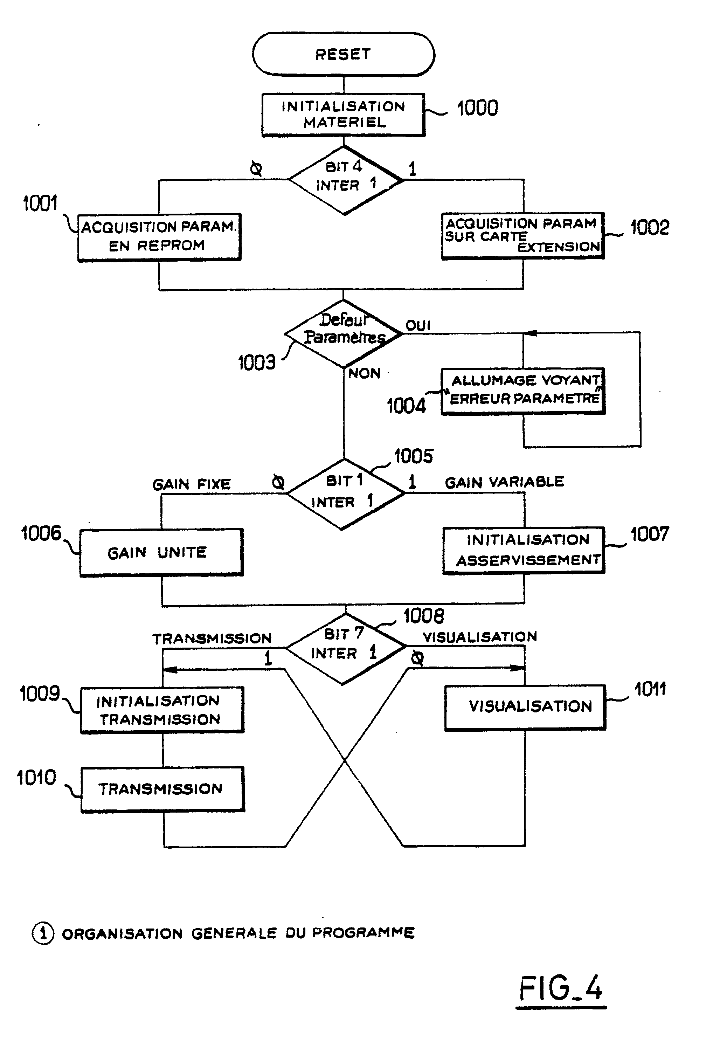

Le fonctionnement du dispositif de l'invention tel que décrit précédemment, sera maintenant décrit en liaison avec les figures 4 à 6 et 7a, 7b représentatives d'organigrammes de logiciels implantés au niveau des périphériques, telsque le périphérique 34 du microprocesseur 33. On comprendra en particulier que les moyens de lecture du moyen de comptage des impulsions et les moyens de repérage du maximum relatif Nim, sont avantageusement constitués par des programmes de calcul intégrés aux logiciels précités.

Conformément à la figure 4, le fonctionnement général du dispositif de comptage de particules d'un rayonnement ionisant, objet de l'invention, est piloté au moyen d'un programme de type "menu" permettant d'effectuer une initialisation convenable du matériel, puis concurrement une transmission d'une impulsion vers le système de traitement de l'information pour chaque photon, dont l'énergie se trouve dans la fenêtre de mesure, et une stabilisation de la plage de réception du spectre d'énergie reçu sur la source de référence ou sur un gain arbitraire déterminé tel que le gain unité du système, puis, enfin, une visualisation permettant la visualisation sur les moyens d'affichage 353 du numéro de canal ou niveau d'énergie de la plage d'amplitude et du contenu en nombre d'impulsions d'amplitude correspondante.

Sur la figure 4, la mise en fonctionnement du dispositif de comptage de particules de rayonnement ionisant selon l'invention est suivie d'une phase d'initiation matérielle, notée 1000, suivie d'un test permettant à l'opérateur le choix de l'introduction des paramètres d'énergie définissant notamment la fenêtre de recherche et la fenêtre de mesure , soit à partir de la mémoire morte REPROM 34, soit à partir des roues codeuses notées 350. Suite à l'introduction des paramètres précités, un test de validité des paramètres est prévu en 1003, permettant l'allumage d'un voyant 352 en cas d'erreur paramètres 1004. En l'absence d'erreur paramètres, un test sur le mode de fonctionnement du dispositif de l'invention est prévu en 1005, le mode de fonctionnement pouvant être choisi par l'opérateur, soit avec un gain fixe tel que précédemment décrit, soit avec un gain ajustable, permettant le réglage de la position relative des niveaux d'amplitude de l'échelle d'amplitude par rapport au niveau d'énergie ou amplitude correspondante du rayonnement de référence. Un test 1008 permet ensuite le passage à la phase de transmission proprement dite 1010 précédemment définie, suite à une phase préalable d'initialisation de transmission 1009 puis à une phase de visualisation notée 1011 et réciproquement. La phase d'initialisation matérielle proprement dite permet essentiellement l'extinction des voyants et afficheurs 352, 353, sauf éventuellement l'allumage d'un voyant initialisation en 352 et l'initialisation du ou des ports sortie des périphériques 34, permettant la transmission vers le système de traitement proprement dit. En outre, une horloge programmable intégrée au microprocesseur 33 permet la création d'une interruption de celui-ci à période fixe. Cette interruption peut être réglée en fonction de la fréquence ou intensité des particules du rayonnement ionisant dont on veut effectuer le comptage. De plus, les paramètres introduits soit au moyen des roues codeuses 350, soit à partir de mémoire EPROM, sont convertis en niveau d'amplitude selon un coefficient de proportionnalité déterminé. A titre d'exemple non limitatif, un canal élémentaire peut correspondre à une bande d'énergie de 50 KeV. Peuvent également être introduits au cours de la phase d'initialisation du matériel, des paramètres tels que la durée d'acquisition d'une valeur crête d'une impulsion constituant le signal de détection. Cette durée peut varier par exemple de 5 à 40 secondes selon l'application considérée. Un autre paramètre tel que le nombre de temps de mesure élémentaire, correspondant sensiblement à deux interruptions successives du microprocesseur 33, sur lesquelles l'écart de la position réelle du maximum Nim du nombre d'impulsions du rayonnement de référence est mesuré par rapport à la position théorique de celui-ci peut également être introduit. Ce nombre B permet, pour une même valeur d'écart précédemment citée ou pour un même sens de variation de cet écart, sur le nombre de mesure B précédemment défini, de corriger en conséquence la position relative du niveau d'amplitude du signal détecté correspondant au rayonnement de référence et de la plage d'amplitude de l'échelle d'amplitude qui lui est normalement réservée.

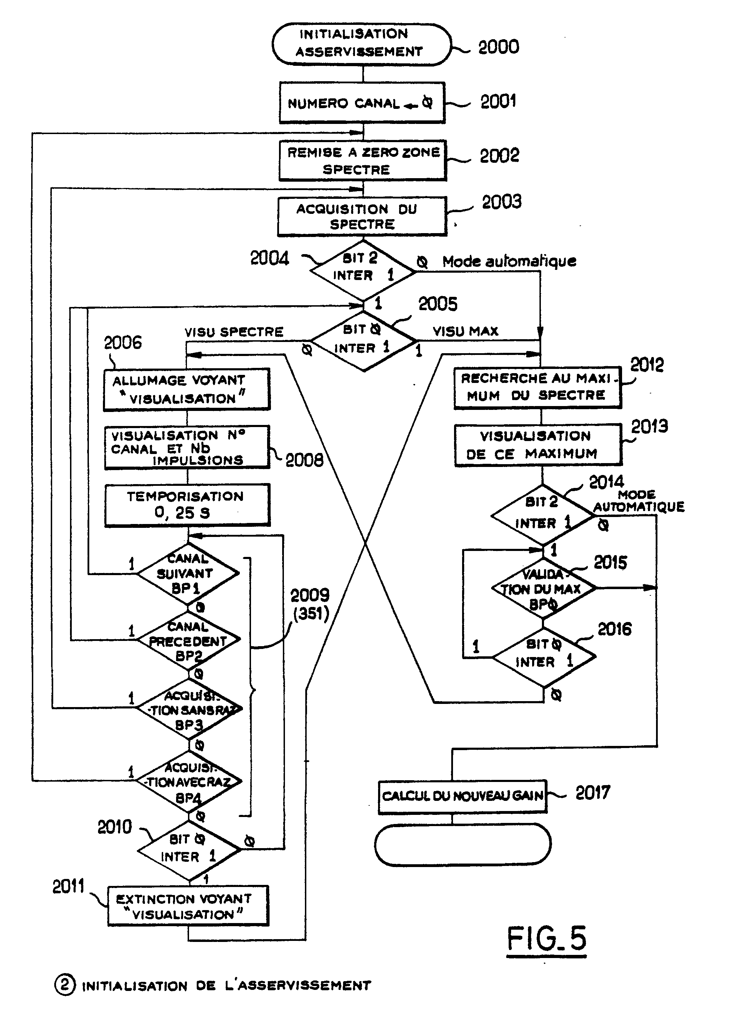

Enfin, le test de validité des paramètres réalisé en 1003, peut consister en un test de cohérence des valeurs d'énergie introduites définissant la fenêtre de recherche et la fenêtre de mesure par exemple. La phase d'initialisation de l'asservissement notée 1007 sur la figure 4, sera maintenant décrite en liaison avec la figure 5.

Ainsi qu'il apparaît sur cette figure, la phase d'initialisation de l'asservissement débutant en 2000 comporte une définition du numéro de canal en 2001 suivie d'une remise à zéro de la zone mémoire affectée à la mémorisation des valeurs représentatives du spectre d'énergie du rayonnement ionisant reçu 2002 elle-même suivie d'une phase d'acquisition du spectre d'énergie en 2003. Un test en 2004 permet selon le choix de l'opérateur un fonctionnement en mode manuel ou en mode automatique de l'asservissement. En fonctionnement en mode manuel, un test en 2005 permet soit une visualisation des valeurs du spectre d'énergie du rayonnement ionisant reçu, soit une visualisation du maximum du spectre, la validation de ce maximum par l'utilisateur permettant le calcul du nouveau gain. En mode automatique, une phase de recherche du maximum du spectre est effectuée en 2012 suivie d'une phase de visualisation de ce maximum 2013, la poursuite du fonctionnement en mode automatique suite à un test 2014 permettant le calcul immédiat du nouveau gain en 2017. Dans le cas du fonctionnement en mode manuel, suite au test 2005 précédemment décrit ou suite au test 2014 après validation en un test de validation du maximum en 2015 et un test de présence de validation en 2016, une phase de visualisation du spectre proprement dit est lancée. Celle-ci comporte une phase d'allumage voyant, un voyant 352, "visualisation" en 2006, suivi d'une visualisation du numéro de canal et du nombre d'impulsions au niveau du moyen d'affichage 353 en 2008. L'utilisateur peut alors, au moyen des boutons poussoirs 351, visualiser les différents canaux, c'est-à-dire le numéro correspondant des canaux et le nombre d'impulsions correspondantes, par actionnement d'un des boutons poussoirs pour la visualisation du canal suivant et l'actionnement d'un autre bouton poussoir 352, pour la visualisation du canal précédent. Les boutons poussoirs 351 jouent ainsi le rôle de boutons de fonction. Ceux-ci peuvent permettre en particulier une nouvelle acquisition de spectre sans remise à zéro de la zone de spectre précédemment définie, ou au contraire une acquisition avec remise à zéro. Un test sur l'état des boutons poussoirs 352 en 2010 permet après extinction en 2011 du voyant de visualisation de passer à nouveau à la phase de visualisation du maximum.

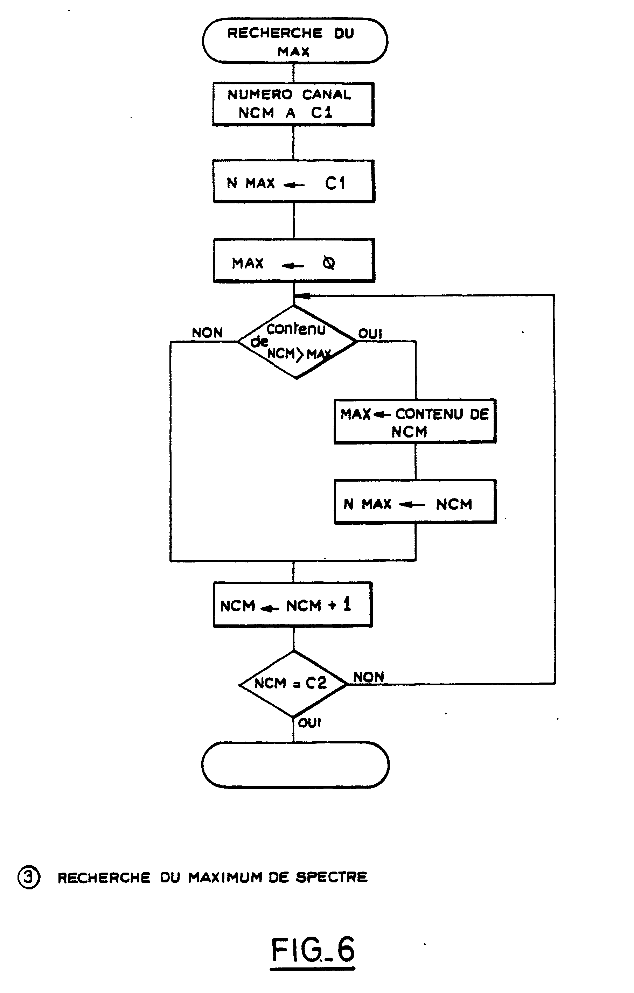

La phase de recherche du maximum du spectre, notée 2012 sur la figure 5, peut consister, ainsi que représentée en figure 6, en un programme analogue à un programme de tri d'une valeur maximale parmi un nombre donné de valeurs, ce nombre correspondant bien entendu au nombre de canaux Ci ou de niveaux d'amplitude de l'échelle d'amplitude. Un tel programme ne sera pas décrit de manière plus détaillée, car il correspond à des structures algorythmiques classiques pour ce type d'opérations.

En ce qui concerne le calcul du gain, l'écart entre le numéro du canal Ct dans lequel le pic correspondant au rayonnement de référence doit théoriquement se trouver et le numéro du canal Cm dans lequel le pic correspondant au rayonnement de référence se trouve effectivement, permet de calculer la valeur à fournir au convertisseur numérique-analogique 36 pour replacer le pic du rayonnement de référence dans le canal approprié. Cette valeur numérique peut par exemple, pour une définition linéaire de la correspondance bi-univoque entre le numéro des canaux Ci ou niveau d'amplitude de l'échelle d'amplitude et le niveau d'énergie des particules du rayonnement ionisant considéré, vérifier une relation linéaire proportionnelle au rapport Ct/Cm.

L'initialisation matérielle et l'initialisation asservissement référencées respectivement en 1000 et en 1007 sur la figure 4 étant terminées, le dispositif objet de l'invention permet alors le passage en mode transmission ou en mode visualisation.

A titre d'exemple non limitatif, la phase initialisation de la transmission 1009 peut comporter l'illumination d'un voyant de transmission 352, l'affichage sur les moyens d'affichage 353 de la valeur numérique appliquée sur le convertisseur numérique-analogique 36 par exemple.

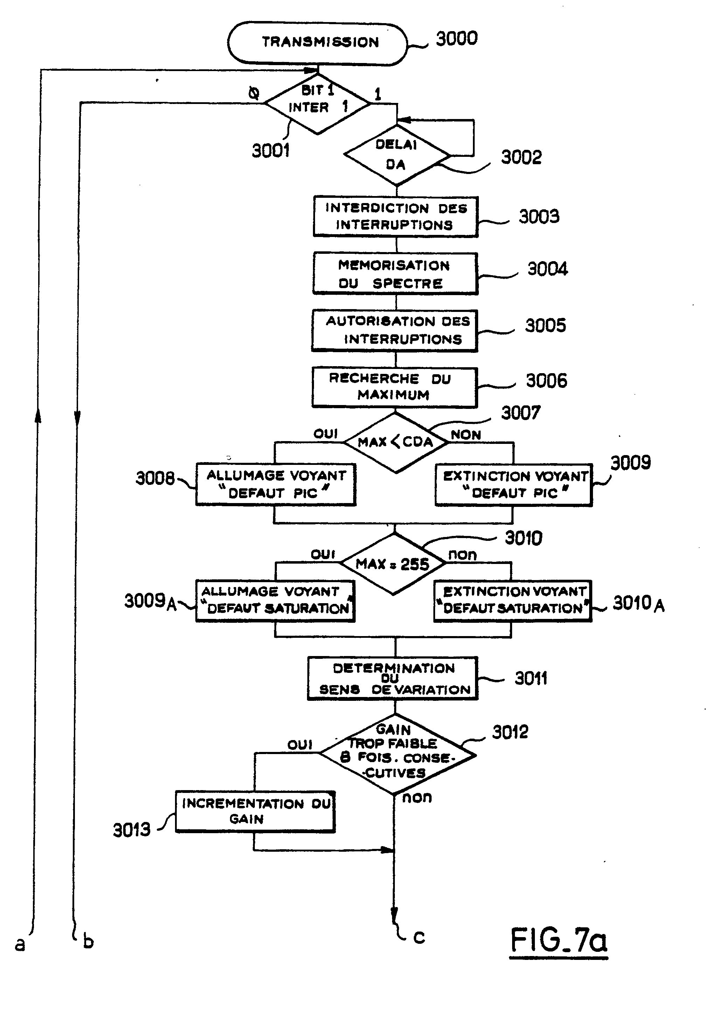

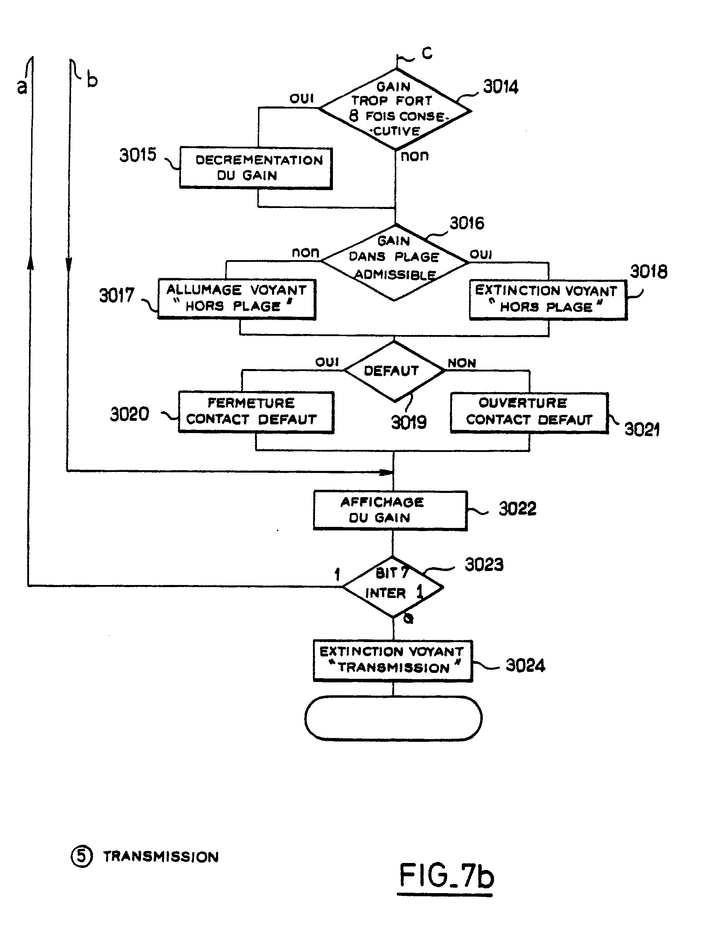

La phase dite de transmission proprement dite sera décrite en liaison avec les figures 7a et 7b, lesquelles sont complémentaires, dans le cas d'un fonctionnement en asservissement en gain ajustable, état de fonctionnement déterminé par un test 3001.

En cas de fonctionnement en asservissement en gain ajustable, le spectre d'énergie peut être acquis par période de durée déterminée notée DA en 3002, puis la recherche du maximum du spectre dans la fenêtre de recherche est effectuée en 3006, après interdiction des interruptions en 3003, mémorisation du spectre en 3004, puis nouvelle autorisation des interruptions en 3005. La validité du maximum déterminée, par rapport à une valeur notée CDA est testée en 3007 entraînant l'allumage d'un voyant 352 "défaut-pic" en 3008 en cas de test négatif et l'extinction de ce voyant en 3009 ou le maintien à l'état d'extinction de celui-ci, en cas de test positif. Un test de vérification de saturation est effectué en 3010 avec allumage ou extinction en $3009_A$ et $3010_A$ d'un voyant 352 de "défaut saturation". Dans les deux cas de défaut, test 3007 et test 3010, la transmission des impulsions vers les circuits de traitement est suspendue et un contact de défaut noté 37 sur la figure 2 est fermé. En l'absence de défaut, la position du maximum réel Cm est comparée à la position théorique Ct précédemment définie en 3011. Des tests 3012 et 3014 sur B acquisitions consécutives, permettent alors soit l'incrémentation du gain en 3013, soit la décrémentation du gain en 3015 selon le cas. Un nouveau test 3016 est alors effectué de façon à vérifier que le gain de l'amplificateur à gain ajustable 301 est effectivement situé dans la plage admissible. L'état du gain précité est indiqué en 3017, 3018, la présence d'un gain hors plage entraînant la suspension de la transmission des impulsions vers les circuits de traitement par la fermeture du contact de défaut 37 précité. Enfin, en l'absence de défaut, la valeur appliquée au convertisseur numérique-analogique 37 est affichée en 3022 sur les moyens d'affichage 353, un test en 3023 permettant soit le retour à la phase de transition, soit au contraire, après extinction du voyant transmission en 3024, le passage en mode visualisation.

De manière indication non limitative, le mode de visualisation tel que mentionne précédemment peut comporter une mise à zéro du numéro de canal ou numéro de niveau d'amplitude considéré, puis une remise à zéro de la zone de mémorisation de spectre, puis une acquisition du spectre. Le numéro du canal considéré est alors affiché au niveau des moyens d'affichage 353, ainsi que le nombre d'impulsions dans le canal considéré, ce nombre d'impulsions pouvant, par exemple, être affiché par paquet d'un nombre donné d'impulsions. De la même manière que dans le cas du fonctionnement en mode transmission, les boutons poussoirs 351 constituant des boutons de fonction permettent soit de visualiser le canal suivant, soit de visualiser le canal précédent, ainsi que notamment la réalisation d'une acquisition avec remise à zéro ou sans remise à zéro.

Le dispositif de comptage de particules d'un rayonnement ionisant, objet de l'invention, présente un très bon degré de stabilité dans la précision de mesure, en raison des caractéristiques telles que précédemment définies. En particulier, le dispositif objet de l'invention peut avantageusement être utilisé pour la mise en oeuvre d'un procédé de mesure de débit de fuite en temps réel entre le circuit primaire et le circuit secondaire d'un générateur de vapeur.

Conformément à l'utilisation du dispositif objet de l'invention, ce dernier permet d'effectuer la détection à l'extérieur du circuit secondaire, en un point déterminé de celui-ci, d'un traceur radioactif contenu dans le fluide du circuit primaire. Bien entendu, dans le cas d'un générateur de vapeur, le traceur radioactif est l'isotope 16 de l'azote, $N^{16}$, normalement contenu dans le fluide en circulation dans le circuit primaire du générateur.

La détection des particules du rayonnement ionisant émis par l'isotope 16 de l'azote permet alors, soit de déclencher des systèmes d'alarme ou analogues.

En raison du grand degré de sensibilité et de précision des mesures susceptibles d'être réalisées au moyen du dispositif objet de l'invention, il est également possible de calculer le débit de fuite q entre circuit primaire et circuit secondaire, à partir de la relation :

$$q = \frac{Q \cdot \rho p}{\rho v} \cdot k \cdot \frac{Ap}{Av}$$

Dans cette relation:

$\rho p$     représente la masse volumique du fluide primaire,

$Ap$     représente la concentration radioactive en isotope 16 de l'azote $N^{16}$ du fluide primaire au niveau de la fuite,

$Q$     représente le débit de vapeur,

$\rho v$     représente la masse volumique de la vapeur,

$Av$     représente la concentration radioactive en isotope 16 de l'azote $N^{16}$ dans la vapeur au niveau du point de mesure,

$k$     représente un coefficient caractéristique de la décroissance de concentration du traceur ou élément radioactif dans le fluide du circuit secondaire.

Le coefficient k précité dépend notamment de l'installation et des paramètres de construction de celle-ci.

La méthode de mesure de fuite primaire-secondaire est basée sur la détection de l'azote 16 dans la vapeur.

L'azote 16 est le contaminant prépondérant du circuit primaire. Formé par activation neutronique de l'oxygène de l'eau son activité volumique dans le circuit primaire ne dépend que de la puissance neutronique du réacteur.

Dans le cas où la puissance est inférieure à 5 % de la puissance nominale, la mesure ne peut plus être effectuée par détection de l'azote 16, du fait de sa trop faible activité dans le circuit primaire et du temps de transit prohibitif entre le point de fuite et le point de mesure dans les conditions correspondantes de fonctionnement (période radioactive de l'azote 16 : 7,35 secondes).

Il existe par contre dans ces conditions de fonctionnement d'autres radioéléments qui sont susceptibles d'être détectés. En effet, si le réacteur présente quelques fuites de gainage du combustible, l'eau primaire est contaminée par des gaz radioactifs issus de la fission de l'uranium 235 ($^{87}$Kr et $^{88}$Kr en particulier). L'activité de ces gaz dans l'eau primaire est généralement suffisante pour permettre de détecter une évolution rapide des fuites entre circuit primaire et circuit secondaire lorsque le réacteur fonctionne à une puissance inférieure à 5 % de la puissance nominale. Cette détection est effectuée dans une bande d'énergie comprise entre 0,2 à 2,2 MeV et est facilitée par le choix de la source de référence ($^{241}$Am) dont le spectre d'impulsions ne présente pas de contribution notable dans cette bande d'énergie.

La commutation d'un mode de comptage "azote 16", de 4,5 à 7 MeV, à un mode de comptage "gaz de fission" de 0,2 à 2,2 MeV est effectuée à partir d'un signal de mesure représentatif de la puissance du réacteur, par rapport à la puissance nominale de celui-ci. Ce signal sert également à calculer le débit de fuite dans le mode de fonctionnement ou de comptage "azote 16".

On a ainsi décrit un dispositif comptage de particules d'un rayonnement ionisant de niveau d'énergie déterminé permettant, en raison du haut degré de précision et de stabilité de mesure de comptage susceptible d'être effectuée dans la mise en oeuvre de celui-ci, de définir des applications particulières d'un très grand intérêt en milieu industriel et notamment dans des conditions d'utilisation très rudes, telles que par exemple pour la surveillance des installations de centrales nucléaires.

**Revendications**

1.    Dispositif de comptage de particules d'un rayonnement ionisant de niveau d'énergie déterminée, comprenant des moyens de détection (1) dudit rayonnement délivrant un signal de détection sous forme d'impulsions, dispositif comportant, en amont des moyens de détection (1), une source (2) de référence délivrant un rayonnement ionisant de référence dont le spectre d'énergie est situé à l'extérieur du spectre d'énergie dudit rayonnement ionisant, ledit dispositif comportant en aval des moyens de détection (1) des moyens (3) de discrimination en amplitude dudit signal de détection selon une échelle de niveaux d'amplitude (Ci) et en spectre d'énergie du rayonnement ionisant reçu, ayant engendré lesdites impulsions, par comptage du nombre (Ni) d'impulsions d'amplitude donnée, par rapport aux niveaux (Ci) de l'échelle d'amplitude, engendrées pendant un intervalle de temps de mesure, caractérisé en ce qu'il comporte des moyens (4) de réglage de la position relative des niveaux d'amplitude (Ci) de l'échelle d'amplitude et de l'amplitude des impulsions engendrées par le rayonnement ionisant de référence, discriminé en fonction du nombre (Ni) d'impulsions de même amplitude déterminée comptées pendant le temps de mesure, et en ce que lesdits moyens (3) de discrimination en amplitude comportent des moyens (32,33) d'échantillonnage des impulsions du signal de détection constitués par un convertisseur analogique numérique (32) piloté par un microprocesseur (33) muni de ses périphériques (34) et délivrant pour chaque impulsion amplifiée un signal numérique représentatif de l'amplitude de celle-ci, et des moyens (33,34) de comparaison dudit signal numérique auxdits niveaux de l'échelle d'amplitude et de comptage des impulsions d'amplitude déterminée, associés au niveaux de l'échelle d'amplitude, lesdits moyens de comparaison et de comptage (33,34) étant constitués par ledit microprocesseur (33) et ses périphériques (34) comportant des zones mémoires de la mémoire adressable (RAM 34) associée au microprocesseur (33), un niveau de l'échelle d'amplitude correspondant à une zone mémoire déterminée, et en ce que lesdits moyens de réglage de la position relative des niveaux d'amplitude (Ci) de l'échelle d'amplitude et de l'amplitude des impulsions engendrées par le rayonnement ionisant de référence sont constitués par des moyens amplificateurs à gain ajustable (5) insérés entre les moyens de détection (1) et les moyens (3) de discrimination en amplitude et en spectre d'énergie du rayonnement ionisant et constitués par un amplificateur intermédiaire à gain ajustable (301) commandé par le microprocesseur (33) par l'intermédiaire d'un convertisseur numérique analogique (36), lesdits moyens de réglage de la position relative des niveaux d'amplitude (Ci) et de l'amplitude des impulsions engendrées par le rayonnement ionisant de référence comportant des moyens de décalage de l'adresse des zones mémoires vives (RAM 34).

2. Dispositif selon la revendication 1, caractérisé en ce que les moyens (3) de discrimination en amplitude dudit signal de détection et en spectre d'énergie du rayonnement ionisant reçu par comptage du nombre d'impulsions d'amplitude donnée comportent en outre :
   - des moyens (30) d'amplification des impulsions délivrées par les moyens de détection (1),
   - des moyens (31) de détection de l'amplitude crête (31) des impulsions amplifiées délivrées par les moyens d'amplification (30).

3. Dispositif selon l'une des revendications 1 ou 2, caractérisé en ce qu'au microprocesseur desdits moyens de comparaison et de comptage (33,34) sont associés des périphériques d'entrée-sortie (35) permettant le codage des niveaux d'échelle d'amplitude et l'affichage de paramètres calculés ou mesurés.

4. Dispositif selon l'une des revendications 1 à 3, caractérisé en ce que les moyens de discrimination en spectre d'énergie du rayonnement ionisant reçu, ayant engendrés lesdites impulsions, comprennent :
   - des moyens de lecture desdits moyens de comptage, dans un intervalle de temps de mesure, du nombre d'impulsions d'amplitude sensiblement égale aux différents niveaux de l'échelle d'amplitude ;
   - des moyens de repérage du maximum (Nim) relatif du nombre (Ni) d'impulsions d'amplitude correspondant à chaque niveau (Ci) de l'échelle d'amplitude, ledit maximum (Nim) correspondant au niveau d'amplitude des impulsions engendrées par le rayonnement de référence.

5. Dispositif selon l'une des revendications précédentes, caractérisé en ce que la source de référence (2) est constituée par une source contenant l'isotope 241 de l'américium délivrant une énergie équivalente $\gamma$ de l'ordre de 2500 Kev.

6. Dispositif selon l'une des revendications précédentes, caractérisé en ce que les moyens de détection comportent :
   - un scintillateur permettant d'engendrer un changement de fréquence dudit rayonnement $\gamma$ reçu,
   - un photomultiplicateur sensible au signal obtenu par changement de fréquence du rayonnement γ,
- un préamplificateur délivrant ledit signal de détection,
- une sonde de température (6) permettant d'engendrer un signal représentatif de la température du scintillateur afin d'obtenir une compensation du rendement de détection du rayonnement issu de la source de référence en fonction de la température.

7.  Utilisation d'un dispositif de comptage de particules d'un rayonnement ionisant selon l'une des revendications 1 à 6, pour la mise en oeuvre d'un procédé de débit de fuite en temps réel entre le circuit primaire et le circuit secondaire d'un générateur de vapeur dans lequel le procédé consiste :
- à détecter à l'extérieur du circuit secondaire, en un point déterminé de celui-ci un traceur radioactif, tel que l'isotope 16 de l'azote, $N^{16}$,
- à calculer le débit de fuite q entre circuit primaire et secondaire à partir de la relation :

$$q = \frac{Q \bullet \rho p}{\rho v} \bullet k \bullet \frac{Ap}{Av}$$

dans laquelle

| | |
|---|---|
| $\rho p$ | représente la masse volumique du fluide primaire, |
| Ap | représente la concentration radioactive en isotope 16 de l'azote $N^{16}$ du fluide primaire au niveau de la fuite, |
| Q | représente le débit de vapeur, |
| $\rho v$ | représente la masse volumique de la vapeur, |
| Av | représente la concentration radioactive en isotope 16 de l'azote $N^{16}$ dans la vapeur au niveau du point de mesure, |
| k | un coefficient caractéristique de la décroissance de concentration du traceur. |

8.  Utilisation selon la revendication 7, caractérisée en ce que aux faibles puissances de fonctionnement du réacteur, inférieures à 5 % de la puissance nominale, le comptage par détection de l'azote 16 est commuté pour effectuer un comptage du gaz de fission, ledit comptage étant effectué dans une bande d'énergie comprise entre 0,2 et 2,2 MeV.

**Claims**

1.  Device for metering particles of ionising radiation with specified energy level, comprising means of detection (1) of the said radiation, delivering a detection signal in the form of pulses, the device comprising, upstream of the means of detection (1), a reference source (2) delivering reference ionising radiation whose energy spectrum lies outside the energy spectrum of the said ionising radiation, the said device comprising downstream of the means of detection (1), means (3) of amplitude-discrimination of the said detection signal according to a scale of amplitude levels (Ci) and energy spectrum-discrimination of the received ionising radiation having generated the said pulses, by metering the number (Ni) of pulses with given amplitude, relative to the levels (Ci) of the amplitude scale, and which were generated during a measurement time interval, characterised in that it comprises means (4) of adjusting the relative position of the amplitude levels (Ci) of the amplitude scale and of the amplitude of the pulses generated by the reference ionising radiation discriminated as a function of the number (Ni) of pulses with equal specified amplitude which were metered during the measurement time, and in that the said means (3) of amplitude-discrimination comprise means (32, 33) of sampling the pulses of the detection signal, which consist of an analog/digital converter (32) driven by a microprocessor (33) equipped with its peripherals (34) and which, for each amplified pulse, delivers a digital signal representing the amplitude of this pulse, and means (33, 34) of comparing the said digital signal with the said levels of the amplitude scale and of metering the pulses with specified amplitude, and which are associated with the levels of the amplitude scale, the said means of comparing and of metering (33, 34) consisting of the said microprocessor (33) and its peripherals (34) comprising memory zones of the addressable memory (RAM 34) associated with the microprocessor (33), one level of the amplitude scale corresponding to a specified memory zone, and in that the said means of adjusting the relative position of the amplitude levels (Ci) of the amplitude scale and of the amplitude of the pulses generated by the reference ionising radiation consist of variable-gain amplifying means (5) inserted between the means of detection (1) and the means (3) of amplitude-discrimination and energy spectrum-discrimination of the ionising radiation, consisting of a variable-gain intermediate amplifier (301) controlled by the microprocessor (33) via a digital/analog converter (36), the said means of adjusting the relative position of the amplitude levels (Ci) and of the amplitude of the pulses generated by the reference ionising radiation comprising means of shifting the address of the random-access memory zones (RAM 34).

2. Device according to Claim 1, characterised in that the means (3) of amplitude-discrimination of the said detection signal and energy spectrum-discrimination of the ionising radiation received by metering the number of pulses with given amplitude furthermore comprise:
   - means (30) of amplifying the pulses delivered by the means of detection (1),
   - means (31) of detecting the peak amplitude (31) of the amplified pulses delivered by the means of amplifying (30).

3. Device according to one of Claims 1 or 2, characterised in that input/output peripherals (35) permitting the coding of the amplitude scale levels and the displaying of calculated or measured parameters are associated with the microprocessor of the said means of comparing and of metering (33, 34).

4. Device according to one of Claims 1 to 3, characterised in that the means of energy spectrum-discrimination of the received ionising radiation having generated the said pulses comprise:
   - means of reading the said means of metering, within a measurement time interval, the number of pulses of amplitude substantially equal to the various levels of the amplitude scale;
   - means of locating the relative maximum (Nim) of the number (Ni) of pulses with amplitude corresponding to each level (Ci) of the amplitude scale, the said maximum (Nim) corresponding to the amplitude level of the pulses generated by the reference radiation.

5. Device according to one of the preceding claims, characterised in that the reference source (2) consists of a source containing the 241 isotope of americium delivering equivalent $\gamma$-ray energy of the order of 2500 KeV.

6. Device according to one of the preceding claims, characterised in that the means of detection comprise:
   - a scintillator permitting generation of a change in frequency of the said received $\gamma$ radiation,

   - a photomultiplier sensitive to the signal obtained by change in frequency of the $\gamma$ radiation,
   - a preamplifier delivering the said detection signal,
   - a temperature probe (6) permitting generation of a signal representing the temperature of the scintillator so as to obtain a compensation of the efficiency of detection of the radiation emanating from the reference source as a function of temperature.

7. Use of a device for metering particles of ionising radiation according to one of Claims 1 to 6, for the implementation of a real-time method of measuring leakage flow rate between the primary circuit and the secondary circuit of a steam generator in which the method consists:
   - in detecting outside the secondary circuit, at a specified point of the latter, a radioactive tracer, such as the 16 isotope of nitrogen, $N^{16}$,
   - in calculating the leakage flow rate q between primary and secondary circuits, from the relationship:

$$q = \frac{Q}{\rho V} \cdot \rho p \cdot k \cdot \frac{Ap}{Av}$$

in which
   $\rho p$    represents the density of the primary fluid,
   Ap    represents the radioactive concentration in 16 isotope of nitrogen $N^{16}$ of the primary fluid in the vicinity of the leak,
   Q    represents the steam flow rate,
   $\rho V$    represents the density of the steam,
   Av    represents the radioactive concentration in 16 isotope of nitrogen $N^{16}$ in the steam in the vicinity of the measurement point,
   k    a coefficient characteristic of the decrease in concentration of the tracer.

8. Use according to Claim 7, characterised in that at low reactor operating powers, less than 5% of the nominal power, the metering by nitrogen 16 detection is switched in order to perform a metering of the fission gas, the said metering being performed inside an energy band lying between 0.2 and 2.2 MeV.

**Patentansprüche**

1. Vorrichtung zum Zählen von Teilchen einer ionisierenden Strahlung eines bestimmten Energieniveaus, welche Mittel zur Feststellung (1) der Strahlung umfaßt, die ein Feststellungssignal in Form von Impulsen abgeben, welche oberhalb der Mittel zur Feststellung (1) eine Referenzquelle (2) umfaßt, die eine ionisierende Referenzstrahlung abgibt, deren Energiespektrum außerhalb des Energiespektrums der ionisierenden Strahlung liegt, wobei die Vorrichtung unterhalb der Mittel zur Feststellung (1) umfaßt: Mittel (3) zur Diskrimination der Amplitude des Feststellungssignals gemäß eines Meßbereichs des Amplitudenpegels (Ci) und des Energiespektrums der erhaltenen ionisierenden Strahlung, welche die Impulse erzeugt hat, durch Zählung der Anzahl (Ni) der Impulse der gegebenen Amplitude in bezug auf den Pegel (Ci) des Meßbereichs der Amplitude, wobei die Impulse während eines Intervalles der Meßzeit erzeugt werden,

**dadurch gekennzeichnet, daß**

sie Mittel zur Steuerung der relativen Position in bezug auf den Amplitudenpegel (Ci) des Meßbereichs der Amplitude und die Amplitude der Impulse umfaßt, die von der ionisierenden Referenzstrahlung erzeugt werden, welche in Abhängigkeit von der Anzahl (Ni) der Impulse der gleichen, vorbestimmten Amplitude, die während der Meßzeit gezählt werden, diskriminiert wird, und daß die Mittel (3) zur Diskrimination der Amplitude Mittel (32, 33) zur Stichprobennahme der Impulse des Feststellungssignals umfassen, welche durch einen Analog-Digital-Umsetzer (32) gebildet werden, der seinerseits durch einen mit seiner Peripherie (34) versehenen Mikroprozessor (33) gesteuert wird, und die für jeden verstärkten Impuls ein digitales, die Amplitude darstellendes Signal ausgeben, und Mittel (33, 34) zum Vergleich des digitalen Signals mit den Pegeln des Amplitudenmeßbereichs und zum Zählen von Impulsen vorbestimmter Amplitude, die den Pegeln des Amplitudenmeßbereichs zugeordnet sind, wobei die Mittel zum Vergleich und zum Zählen (33, 34) durch den Mikroprozessor (33) und seine Peripherien (34) gebildet werden, welche Speicherbereiche aus einem adressierbaren Speicher (RAM 34) umfassen, die dem Mikroprozessor (33) zugeordnet sind, wobei ein Pegel des Meßbereichs der Amplitude einem bestimmten Speicherbereich entspricht, und daß die Mittel zur Steuerung der Position in bezug auf den Amplitudenpegel (Ci) des Amplitudenmeßbereichs und die Amplitude der von der ionisierenden Referenzstrahlung erzeugten Impulse aus Verstärkermitteln mit einstellbarer Verstärkung (5) gebildet werden, die zwischen die Mittel zur Feststellung (1) und die Mittel (3) zur Diskrimination der Amplitude und des Energiespektrums der ionisierenden Strahlung eingefügt sind, und die gebildet werden aus einem Zwischenverstärker mit einstellbarer Verstärkung (301), der vom Mikroprozessor (33) vermittels eines Digital-Analog-Umsetzers (36) gesteuert wird, wobei die Mittel zur Steuerung der Position in bezug auf den Amplitudenpegel (Ci) und auf die Amplitude der durch die ionisierende Referenzstrahlung erzeugten Impulse Mittel zum Verschieben der Adressen der Speicherbereiche (RAM 34) umfassen.

2. Vorrichtung nach Anspruch 1, dadurch gekennzeichnet, daß die Mittel (3) zur Diskrimination der Amplitude des Feststellungssignals und des Energiespektrums der empfangenen ionisierenden Strahlung durch das Zählen der Anzahl der Impulse vorgegebener Amplitude außerdem umfassen:
   - Verstärkermittel (30) der von den Mitteln zur Feststellung (1) erhaltenen Impulse
   - Mittel (31) zur Feststellung der Amplitudenspitze (31) der verstärkten Impulse, welche durch die Verstärkermittel (30) erzeugt werden.

3. Vorrichtung nach einem der Ansprüche 1 oder 2, dadurch gekennzeichnet, daß mit dem Mikroprozessor der Mittel zum Vergleich und zum Zählen (33, 34) Einund Ausgangsperipherien (35) verbunden sind, welche eine Kodierung des Pegels des Meßbereichs der Amplitude und die Anzeige der berechneten oder gemessenen Parameter ermöglichen.

4. Vorrichtung nach einem der Ansprüche 1 bis 3, dadurch gekennzeichnet, daß die Mittel zur Diskrimination des Energiespektrums der empfangenen ionisierenden Strahlung, welche die Impulse erzeugen, umfassen:
   - Lesemittel der Mittel zum Zählen in einem Intervall der Meßzeit, der Anzahl der Impulse der für verschiedene Pegel der Amplitudeneinteilung gleich empfindlichen Amplitude
   - Mittel zur Bestimmung des Maximums (Nim) in bezug auf die Anzahl (Ni) der Impulse der Amplitude, das jedem Pegel (Ci) des Amplitudenmeßbereichs entspricht, wobei das Maximum (Nim) dem Amplitudenpegel der von der ionisierenden Referenzstrahlung erzeugten Impulse entspricht.

5. Vorrichtung nach einem der vorangehenden Ansprüche, dadurch gekennzeichnet, daß die Referenzquelle (2) durch eine Quelle gebildet wird, welche das Americium-241-Isotop enthält, das eine Energie liefert, die einer $\gamma$-Strahlen-Energie in der Größenordnung von 2500 KeV entspricht.

6. Vorrichtung nach einem der vorangehenden Ansprüche, dadurch gekennzeichnet, daß die Mittel zur Feststellung umfassen:
   - einen Szintillator, der es ermöglicht, einen Frequenzwechsel der empfangenen $\gamma$-Strahlung zu erzeugen,
   - einen Photomultiplier, der gegen das vom Frequenzwechsel der empfangenen $\gamma$-Strahlung erhaltene Signal empfindlich ist,
   - einen Vorverstärker, der das Signal zur Feststellung liefert,
   - eine Temperatursonde (6), die es ermöglicht, ein Signal zu erzeugen, das der Temperatur des Szintillators entspricht, um eine Kompensation des Wirkungsgrades der Feststellung der aus der Referenzquelle hervorgegangenen Strahlung in Abhängigkeit von der Temperatur zu ermöglichen.

7. Verwendung einer Vorrichtung zum Zählen von Teilchen einer ionisierenden Strahlung nach einem der Ansprüche 1 bis 6 zur Verwirklichung als Leckraten-Verfahren während einer reellen Zeit zwischen einer Primärschaltung und einer Sekundärschaltung eines Dampfgenerators, in dem das Verfahren besteht aus:
   - dem Feststellen eines radioaktiven Indikators, wie des Stickstoff-Isotops $N^{16}$, außerhalb der zweiten Schaltung an einem vorbestimmten Punkt,
   - dem Ausrechnen der Leckrate q zwischen der Primär-und der Sekundärschaltung nach der Beziehung:

$$q = \frac{Q \cdot \rho p}{\rho v} \cdot k \cdot \frac{A\rho}{Av}$$

in welcher
$\rho p$ die Dichte des ersten Fluids bedeutet,
$A\rho$ die radioaktive Konzentration des Stickstoff-Isotops $N^{16}$ des ersten Fluids auf der Höhe des Lecks darstellt,
Q die Dampfleistung bedeutet,
$\rho v$ die Dichte des Dampfes darstellt,
$Av$ die radioaktive Konzentration des Stickstoff-Isotops $N^{16}$ im Dampf auf der Stufe des Meßpunktes bedeutet,
K ein charakteristischer Koeffizient der Konzentrationsabnahme des Indikators ist.

8. Verwendung nach Anspruch 7, dadurch gekennzeichnet, daß bei geringfügiger Leistung des Reaktorbetriebes, geringer als 5 % der nominellen Leistung, das Zählen durch die Feststellung des Stickstoffs $N^{16}$ umgeschaltet wird, um ein Zählen des Gases der Spaltung zu bewerkstelligen, wobei die Zählung in einem Energieband zwischen 0,2 und 2,2 MeV ausgeführt wird.

## FIG_1a

Comptage : Ni

Fenêtre de recherche          Fenêtre de Mesure

Mev  Energie

E1          E3          E2          E4                    E5
C1 Ni,Ci   C3          C2          C4                    C5          Canal

## FIG_1b

FIG_2

FIG_3

**RESET**

INITIALISATION MATERIEL — 1000

BIT 4 INTER 1 — Ø / 1

1001 — ACQUISITION PARAM. EN REPROM

ACQUISITION PARAM SUR CARTE EXTENSION — 1002

Defaut Parametres — 1003 — OUI / NON

ALLUMAGE VOYANT ERREUR PARAMETRE — 1004

1005 — BIT 1 INTER 1 — Ø GAIN FIXE / 1 GAIN VARIABLE

1006 — GAIN UNITE

INITIALISATION ASSERVISSEMENT — 1007

1008 — BIT 7 INTER 1 — TRANSMISSION 1 / VISUALISATION Ø

1009 — INITIALISATION TRANSMISSION

1010 — TRANSMISSION

VISUALISATION — 1011

① ORGANISATION GENERALE DU PROGRAMME

**FIG_4**

16

FIG. 5

② INITIALISATION DE L'ASSERVISSEMENT

③ RECHERCHE DU MAXIMUM DE SPECTRE

FIG. 6

FIG. 7a

FIG_7b

(5) TRANSMISSION